# FASCICULE DE BREVET EUROPEEN

(11) **EP 4 147 417 B1**
(45) Date de publication et mention de la délivrance du brevet: **24.01.2024**
(21) Numéro de dépôt: 21722914.5
(22) Date de dépôt: 06.05.2021
(51) Int. Cl.: H04L 12/10

(54) **GESTION DE L'ALIMENTATION ÉLECTRIQUE PAR CÂBLE ETHERNET**
VERWALTUNG DER STROMVERSORGUNG ÜBER ETHERNET-KABEL
MANAGEMENT OF ELECTRICAL POWER SUPPLY VIA ETHERNET CABLE

(30) Priorité: 07.05.2020 BE 202005306
(43) Date de publication de la demande: 15.03.2023
(73) Titulaire: Ecogreen Soft Sprl, 5000 Namur (BE)
(72) Inventeur: LALLEMAND, Xavier, 5170 Bois de Villers (BE); HEMERIJCK, Olivier, 5336 Courrière (BE)
(74) Mandataire: Gevers Patents
(86) Numéro de dépôt international: PCT/EP2021/061952
(87) Numéro de publication internationale: WO 2021/224371

(56) Documents cités:
- WO-A1-2006/055163
- WO-A1-2013/107015
- WO-A1-2016/029421
- US-A1- 2010 217 965

## Description

### Domaine technique

La présente invention concerne la gestion de l'alimentation électrique par câble Ethernet de dispositifs Ethernet, appelée Power over Ethernet ou PoE en anglais.

### Art antérieur

L'alimentation électrique par câble Ethernet permet de n'utiliser qu'un seul câble Ethernet pour alimenter en électricité un dispositif Ethernet et échanger des données avec lui.

Le document WO2016/029421 A1 décrit un système dans un équipement source d'alimentation alimente un dispositif alimenté par un câble Ethernet. L'équipement source d'alimentation contrôle la mise sous tension / hors tension du dispositif alimenté.

Le document US2010/0217965 A1 décrit un réseau en cascade, avec différents types de terminaux connectés par Ethernet mais de natures telles que certains doivent être alimentés en permanence (Emergency) et d'autres pas.

Le document WO2013/107015 A1 décrit un système PoE comprenant un dispositif alimenté, un équipement source d'alimentation, et un module de gestion d'alimentation. Le module de gestion de l'alimentation est connecté à une couche physique Ethernet et à un module de source d'alimentation au sein de l'équipement source d'alimentation.

### Résumé de l'invention

Un objet de la présente invention est de diminuer la consommation énergétique.

L'invention propose une méthode pour gérer l'alimentation électrique de dispositifs Ethernet, chaque dispositif Ethernet étant alimenté électriquement par un câble Ethernet, la méthode comprenant les étapes suivantes :
- une détermination d'une première liste de dispositifs Ethernet et d'identifiants, la première liste mettant en correspondance les dispositifs Ethernet avec les identifiants,
- une réception d'une information d'entrée permettant de déterminer un des identifiants,
- une détermination, sur base de la première liste, du dispositif Ethernet correspondant à l'identifiant déterminé, et
- un arrêt du courant électrique ou un rétablissement du courant électrique dans le câble Ethernet alimentant le dispositif Ethernet déterminé.

L'invention propose en particulier une méthode pour gérer l'alimentation électrique de dispositifs Ethernet, chaque dispositif Ethernet étant alimenté électriquement par un câble Ethernet connecté à un système de gestion comprenant une mémoire stockant une première liste de dispositifs Ethernet et d'identifiants, la première liste mettant en correspondance les dispositifs Ethernet avec les identifiants ; la méthode comprenant les étapes suivantes :
- le système de gestion reçoit une information d'entrée permettant de déterminer un des identifiants,
- le système de gestion détermine, sur base de la première liste, le dispositif Ethernet correspondant à l'identifiant déterminé, et
- le système de gestion arrête le courant électrique ou rétablit le courant électrique dans le câble Ethernet alimentant le dispositif Ethernet déterminé ;
caractérisée en ce la réception de l'information d'entrée permettant de déterminer ledit au moins un des identifiants est déclenchée par une opération utilisant un système d'entrée, distinct des dispositifs Ethernet et du système de gestion, et comprenant un dispositif utilisateur et/ou un calendrier électronique correspondant à un des identifiants ; l'information d'entrée indiquant le dispositif utilisateur ou le calendrier électronique utilisé lors de l'opération.

Puisque, suite à l'arrêt du courant dans le câble Ethernet du dispositif Ethernet déterminé, aucun courant ne parvient au dispositif Ethernet déterminé, la méthode selon l'invention permet de couper totalement l'alimentation du dispositif Ethernet déterminé lorsque celle-ci n'est pas nécessaire. Le dispositif Ethernet déterminé n'est donc pas mis en veille mais totalement hors tension puisqu'il ne reçoit aucune puissance électrique. L'information d'entrée résulte ainsi en un arrêt total de consommation énergétique du dispositif Ethernet déterminé.

La première liste permet de faire le lien, de façon automatique, entre l'information d'entrée reçue par le système de gestion et le dispositif Ethernet à couper. En d'autres termes, chaque identifiant de la première liste identifie au moins un des dispositifs Ethernet connectés au système de gestion. Ainsi, l'information d'entrée permet de déterminer un des identifiants de la première liste et donc, via la première liste, quel dispositif Ethernet doit être éteint ou rallumé.

De préférence, l'information d'entrée contient l'identifiant du dispositif utilisateur ou calendrier électronique utilisé lors de l'opération, qui correspond à un des identifiants de dispositif Ethernet.

Dans la méthode selon l'invention, une opération utilisant un dispositif utilisateur et/ou un calendrier électronique correspondant à un des identifiants déclenche un envoi de l'information d'entrée, par exemple par le système d'entrée. Cette information d'entrée indique le dispositif utilisateur ou le calendrier électronique utilisé lors de l'opération. Ainsi, lorsque le système de gestion reçoit cette information, il peut faire la correspondance entre le dispositif utilisateur et/ou calendrier électronique et un des dispositifs Ethernet, et arrêter le courant ou rétablir le courant dans le câble connectant ce dispositif Ethernet déterminé.

Dans la méthode selon l'invention, l'opération utilisant le système d'entrée peut être automatique ou être réalisée par un utilisateur. L'envoi et la réception de l'information d'entrée, la détermination du dispositif Ethernet sur base de l'information d'entrée et de la première liste, et l'arrêt ou le rétablissement du courant dans le câble Ethernet correspondant sont préférentiellement automatiques.

Une fois qu'un dispositif Ethernet est coupé, la méthode peut être utilisée pour le rallumer automatiquement sur base de l'information d'entrée.

Il est aussi possible, dans le cadre de l'invention, que tous les dispositifs Ethernet soient initialement coupés (par exemple parce qu'ils sont tous coupés automatiquement le soir lorsque le système d'alarme du bâtiment s'enclenche), et qu'ils soient rallumés au fur et à mesure de la réception des informations d'entrée (par exemple le matin quand les employés arrivent dans le bâtiment).

L'invention permet de diminuer la consommation électrique, donc de l'empreinte carbone. En outre, en coupant totalement l'alimentation électrique de dispositifs Ethernet tels des antennes wifi, elle permet de diminuer l'émission d'ondes électromagnétiques.

Dans le cadre du présent document, un « dispositif Ethernet » est un dispositif électrique connectable à un câble Ethernet de façon à ce que l'alimentation électrique du dispositif soit, au moins partiellement et préférentiellement totalement, assurée par le câble Ethernet. Le câble Ethernet permet aussi, préférentiellement, au dispositif Ethernet, d'envoyer et/ou de recevoir des données.

Les câbles Ethernet sont connectés d'une part aux dispositifs Ethernet et d'autre part à un système de gestion. Le système d'entrée est distinct du système de gestion : les câbles Ethernet qui alimentent les dispositifs Ethernet ne sont pas physiquement connectés au système de gestion. Le système d'entrée est distinct des dispositifs Ethernet : son alimentation ne peut pas être coupée ou rétablie par la méthode selon l'invention.

Dans un mode de réalisation, l'opération est réalisée par un utilisateur à l'aide du dispositif utilisateur.

Dans un mode de réalisation, la première liste est déterminée en balayant des câbles Ethernet connectés au système de gestion, de façon à déterminer les dispositifs Ethernet connectés au système de gestion. Le balayage utilise de préférence le protocole SIP (Session Initiation Protocol). Il peut être réalisé plusieurs fois par jour.

Dans un mode de réalisation, les câbles Ethernet sont connectés d'une part aux dispositifs Ethernet et d'autre part à des ports d'un système de gestion, par exemple à des ports d'un commutateur réseau du système de gestion, l'arrêt du courant électrique étant réalisé par une fermeture du port connecté au câble Ethernet alimentant le dispositif Ethernet déterminé, et le rétablissement du courant électrique étant réalisé par une ouverture du port connecté au câble Ethernet alimentant le dispositif Ethernet déterminé.

Dans un mode de réalisation, la méthode comprend une détermination de la première liste. La première liste est préférentiellement déterminée grâce à une réception d'une liste d'utilisateurs, chaque utilisateur correspondant à un des identifiants. Ainsi, on peut fournir au système de gestion une liste d'utilisateurs (qui permet d'obtenir les identifiants de la première liste) avec la référence de leur téléphone fixe (qui permet d'obtenir les dispositifs Ethernet de la première liste).

Il existe de nombreux moyens de déterminer la première liste, par exemple sur base de l'entrée d'informations dans le système de gestion et/ou d'opérations réalisées par le système de gestion, comme le balayage mentionné ci-dessus.

Dans un mode de réalisation, l'information d'entrée permet de déterminer s'il faut déclencher un arrêt du courant électrique ou un rétablissement du courant électrique dans le câble Ethernet.

Dans un mode de réalisation, l'opération à l'aide dudit dispositif utilisateur est une lecture par un lecteur de dispositifs utilisateurs .

Dans un mode de réalisation, le dispositif utilisateur comprend un dispositif de pointage, et l'opération déclenchant la réception est un pointage d'entrée, qui déclenche un rétablissement du courant électrique dans le câble Ethernet, ou un pointage de sortie, qui déclenche un arrêt du courant électrique dans le câble Ethernet. Ainsi, lorsqu'un employé quitte son travail en pointant pour sortir, l'alimentation de son dispositif Ethernet est coupée, et elle est rétablie lorsqu'il arrive au travail en pointant pour entrer.

Dans un mode de réalisation, le dispositif utilisateur comprend un dispositif de géolocalisation, et l'opération déclenchant la réception de l'information d'entrée est une géolocalisation dans une zone prédéterminée. Ainsi, lorsqu'un employé quitte son travail en sortant d'un espace qui définit une zone prédéterminée ou en passant un portail qui définit une zone prédéterminée, l'alimentation de son dispositif Ethernet est coupée. L'alimentation est rétablie lorsqu'il arrive au travail en rentrant dans ledit espace ou en passant par ledit portail. Le dispositif de géolocalisation peut être par exemple une puce RFID ou un GPS.

Dans un mode de réalisation où au moins un des identifiants correspond au calendrier électronique, l'information d'entrée provient d'une donnée issue dudit calendrier électronique.

Dans un mode de réalisation, la première liste met en correspondance plusieurs dispositifs Ethernet avec au moins un des identifiants, et la réception d'une information d'entrée permettant de déterminer ledit au moins un des identifiants déclenche un arrêt du courant électrique ou un rétablissement du courant électrique dans les câbles Ethernet alimentant tous les dispositifs Ethernet correspondant à l'identifiant déterminé.

Dans un mode de réalisation, la première liste met en correspondance au moins un des dispositifs Ethernet avec plusieurs identifiants. Par exemple, une imprimante Ethernet peut correspondre à plusieurs identifiants.

Dans un mode de réalisation, l'information d'entrée permet aussi de déterminer si l'identifiant déterminé est dans un premier état ou dans un deuxième état, le rétablissement du courant électrique dans le câble Ethernet alimentant le dispositif Ethernet déterminé étant déclenché si au moins un des identifiants est dans le premier état, et l'arrêt du courant électrique dans le câble Ethernet alimentant le dispositif Ethernet déterminé étant déclenché si tous les identifiants sont dans le deuxième état.

Dans un mode de réalisation, au moins un des dispositifs Ethernet est : un téléphone, par exemple un téléphone fixe, un guichet bancaire automatique, par exemple de type Bancontact, une antenne, par exemple une antenne wifi, une borne interactive, un écran, une imprimante, une caméra, ou une station d'accueil.

L'invention propose en outre un système de gestion de dispositifs Ethernet configuré pour mettre en oeuvre une méthode selon l'un quelconque des modes de réalisation de l'invention.

L'invention propose en outre un programme d'ordinateur comprenant des instructions qui conduisent un système de gestion à exécuter les étapes d'une méthode selon l'un quelconque des modes de réalisation de l'invention. Le programme peut par exemple tourner sur un serveur et/ou sur un commutateur réseau du système de gestion.

L'invention propose en outre un support lisible par ordinateur sur lequel est enregistré ledit programme d'ordinateur.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un exemple de système permettant de mettre en oeuvre l'invention,
- la figure 2 est un premier exemple très schématique d'une première liste qui met en correspondance des dispositifs Ethernet et des identifiants,
- la figure 3 est un exemple très schématique d'une deuxième liste qui met en correspondance des dispositifs Ethernet et des câbles Ethernet,
- la figure 4 est un exemple très schématique d'une troisième liste qui met en correspondance des identifiants et des dispositifs utilisateurs,
- la figure 5 est un exemple très schématique d'une liste d'utilisateurs qui met en correspondance des identifiants et des utilisateurs,
- la figure 6 schématise une méthode selon un mode de réalisation de l'invention, et
- la figure 7 est un deuxième exemple très schématique d'une première liste qui met en correspondance des dispositifs Ethernet et des identifiants.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

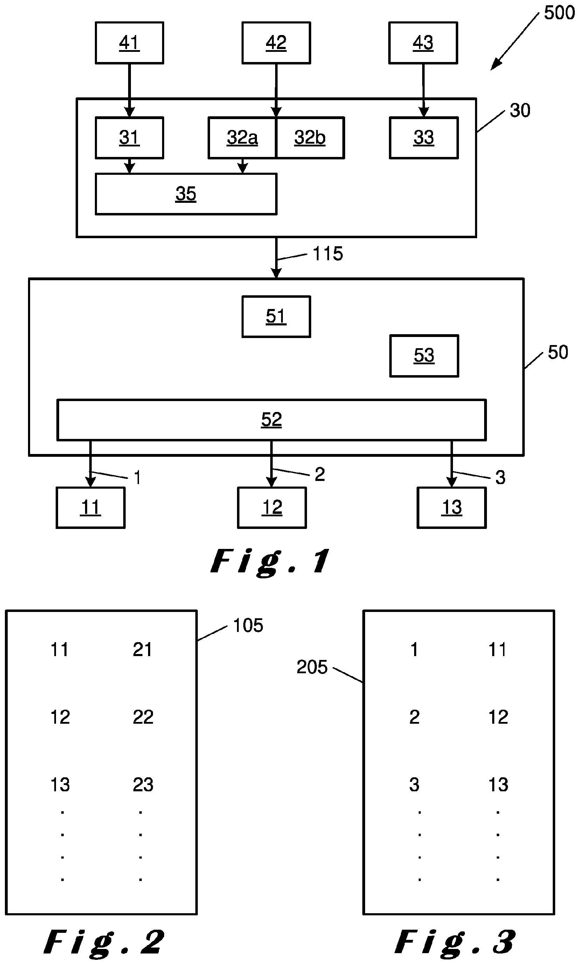

La figure 1 illustre un exemple de système 500 selon l'invention. Le système 500 comprend un système d'entrée 30 et un système de gestion 50 auquel sont connectés mécaniquement et électriquement des câbles Ethernet 1, 2, 3. Le système de gestion 50 reçoit des informations, par exemple une information d'entrée 115 émise par le système d'entrée 30. Il envoie des informations à des dispositifs Ethernet 11, 12, 13 via des câbles Ethernet 1, 2, 3, et alimente les dispositifs Ethernet 11, 12, 13 via leur câble Ethernet 1, 2, 3.

Le système de gestion 50 comprend de préférence un serveur 51, un commutateur réseau 52 Ethernet (généralement appelé switch en anglais), et une mémoire 53 (qui peut être comprise dans le serveur 51 et/ou dans le commutateur réseau 52). Le commutateur réseau 52 comprend une série de ports permettant de brancher les câbles Ethernet 1, 2, 3.

Le système de gestion 50, le serveur 51 et le commutateur réseau 52 peuvent par exemple comprendre une unité arithmétique et logique, sélectionnée parmi : une unité centrale de traitement (CPU), un processeur de signal numérique (DSP), un circuit intégré propre à une application (ASIC), un circuit logique programmable (FPGA) ou une combinaison de ceux-ci et peuvent également inclure des éléments électroniques digitaux ou analogiques ou une combinaison de ceux-ci.

Le système d'entrée 30 peut être opéré, directement ou indirectement, par des utilisateurs 41, 42, 43. Il peut comprendre notamment des dispositifs utilisateurs 31, 32a, des calendriers électroniques 32b, 33 ou d'autres dispositifs électroniques et/ou programmes d'ordinateur. Il peut aussi comprendre un (ou plusieurs) lecteur(s) de dispositifs utilisateurs 35 capable(s) de lire les dispositifs utilisateurs 31, 32a en détectant un identifiant lié au dispositif utilisateur 31, 32a lu.

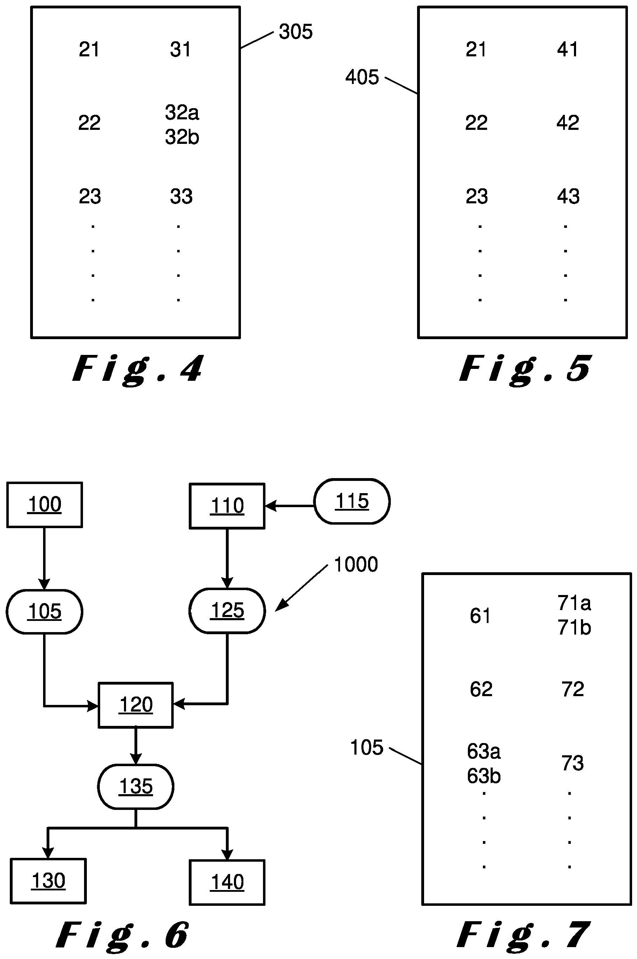

La mémoire 53 comprend une première liste 105 (figure 2) qui met en correspondance les dispositifs Ethernet 11, 12, 13 avec des identifiants 21, 22, 23, qui sont les identifiants des dispositifs Ethernet 11, 12, 13. Elle peut aussi comprendre une deuxième liste 205 (figure 3) qui met en correspondance les dispositifs Ethernet 11, 12, 13 et les câbles Ethernet 1, 2, 3 qui leur sont connectés. Elle peut aussi comprendre une troisième liste 305 (figure 4) qui met en correspondance les identifiants 21, 22, 23 des dispositifs Ethernet 11, 12, 13 et les dispositifs utilisateurs 31, 32a, et/ou les calendriers électroniques 32b, 33 qui ont été attribués aux dispositifs Ethernet 11, 12, 13 identifiés par ces identifiants 21, 22, 23. Elle peut aussi comprendre une liste d'utilisateurs 405 (figure 5) qui met en correspondance les utilisateurs 41, 42, 43 et les identifiants 21, 22, 23 des dispositifs Ethernet 11, 12, 13. De préférence, il n'y a qu'un seul identifiant par utilisateur. Une base de données située dans la mémoire 53 peut comprendre la première liste 105, et éventuellement une ou plusieurs des autres listes. Les différentes listes 105, 205, 305, 405 sont de préférence combinées sous la forme de la base de données.

La figure 6 schématise une méthode 1000 pour gérer l'alimentation électrique de dispositifs Ethernet 1, 12, 13 selon un mode de réalisation de l'invention.

La méthode 1000 comprend une étape de détermination 100 d'une première liste 105 de dispositifs Ethernet 11, 12, 13 et d'identifiants 21, 22, 23. Un exemple très schématique de première liste 105 est illustré à la figure 2. La détermination 100 de la première liste 105 est préférentiellement réalisée par le système de gestion 50, mais elle peut être réalisée ailleurs puis fournie au système de gestion 50 tout en restant dans le cadre de l'invention. Elle peut comprendre un balayage (scan en anglais) des câbles Ethernet 1, 2, 3 connectés au système de gestion 50, de façon à déterminer les dispositifs Ethernet 11, 12, 13 connectés au système de gestion 50. Elle peut aussi notamment comprendre la réception d'une liste 405 (telle qu'illustrée figure 5) d'utilisateurs 41, 42, 43, chaque utilisateur correspondant à un des identifiants 21, 22, 23. Par exemple, un fichier contenant la liste 405 d'utilisateurs peut être chargée sur le système de gestion 50.

La détermination 100 de la première liste 105 peut comprendre une validation d'un avant-projet de première liste fourni au système de gestion 50 ou établi par le système de gestion 50. La détermination 100 de la première liste 105 peut consister en une validation d'un avant-projet de première liste fourni au système de gestion 50.

La méthode 1000 comprend une étape de réception 110 d'une information d'entrée 115 permettant de déterminer un 125 des identifiants 21, 22, 23 de la première liste 105.

Dans un mode de réalisation de l'invention, le système d'entrée 30, sur base d'une opération réalisée, directement ou indirectement, par un utilisateur déterminé envoie au système de gestion 50 une information d'entrée 115 permettant de déterminer l'identifiant 125 correspondant à l'utilisateur déterminé. Par exemple, l'information d'entrée 115 indique le dispositif utilisateur 31, 32a ou le calendrier électronique 32b, 33 utilisé lors de l'opération, ce qui permet au système de gestion 50 de faire le lien avec un identifiant déterminé 125 sur base de la troisième liste 305. Le lien entre l'information d'entrée et l'identifiant peut se faire de n'importe quelle manière.

La méthode 1000 comprend une étape de détermination 120 de l'identifiant 125 contenu dans l'information d'entrée 115, et sur base de la première liste 105, du dispositif Ethernet 135 correspondant à l'identifiant déterminé 125. Le système de gestion 50 connait maintenant le dispositif Ethernet déterminé 135 pour lequel il doit mettre ou supprimer l'alimentation électrique.

La méthode 1000 comprend une étape d'arrêt du courant électrique 130 ou un rétablissement du courant électrique 140 dans le câble Ethernet alimentant le dispositif Ethernet déterminé 135. La coupure 130 ou le rétablissement 140 du courant électrique se produit au niveau du système de gestion 50, préférentiellement au niveau du commutateur réseau 52.

Dans un mode de réalisation de l'invention, l'information d'entrée 115 permet de déterminer s'il faut déclencher un arrêt du courant électrique 130 ou un rétablissement du courant électrique 140 dans le câble Ethernet. Par exemple, le dispositif utilisateur 31 peut être un badge d'ouverture d'une porte et le lecteur de dispositifs utilisateurs 35 comprend une première partie d'un premier côté (préférentiellement extérieur) de la porte, et une deuxième partie d'un deuxième côté (préférentiellement intérieur) de la porte. Lorsque le dispositif utilisateur 31 est lu par la première partie du lecteur 35, cela indique que l'utilisateur 41 entre. L'information d'entrée 115 permet de déterminer l'utilisation du dispositif utilisateur 31 et indique qu'il faut rétablir le courant. Lorsque le dispositif utilisateur 31 est lu par la deuxième partie du lecteur 35, cela indique que l'utilisateur 41 sort. L'information d'entrée 115 permet de déterminer l'utilisation du dispositif utilisateur 31 et indique qu'il faut arrêter le courant.

Dans un mode de réalisation de l'invention, où au moins un des identifiants 21, 22 correspond à un dispositif utilisateur 31, 32a, la réception 110 de l'information d'entrée 115est déclenchée par une opération utilisant le dispositif utilisateur 31, 32a, par exemple une lecture par un lecteur de dispositifs utilisateurs 35.

Par exemple, le dispositif utilisateur 31 peut comprendre une puce RFID, et l'opération peut être une lecture de la puce RFID par un capteur RFID qui est compris dans un lecteur de dispositifs utilisateurs 35. La lecture peut être consciemment déclenchée par l'utilisateur 41 ou peut se produire automatiquement lorsqu'il passe à proximité du lecteur 35, ce qui permet de géolocaliser le dispositif utilisateur 31.

Dans un mode de réalisation de l'invention, au moins un des identifiants 22, 23 correspond à un calendrier électronique 32b, 33, et l'information d'entrée 115 provient d'une donnée issue dudit calendrier électronique 32b, 33. Par exemple, le calendrier électronique 33 peut être le calendrier de réservation d'une salle de réunion (qui est alors considérée comme l' « utilisateur 43 »), une information d'entrée 115 indiquant qu'il faut rétablir le courant est envoyée au début de chaque réunion indiquée dans le calendrier électronique 33, et une information d'entrée 115 indiquant qu'il faut arrêter le courant est envoyée à la fin de chaque réunion indiquée dans le calendrier électronique 33. Cela permet que les dispositifs Ethernet de cette salle 43 ne soient alimentés que lorsque le calendrier 33 a enregistré une réservation de cette salle 43.

Dans un mode de réalisation de l'invention, l'information d'entrée 115 indiquer aussi si l'identifiant déterminé 125 est dans un premier état, par exemple un état présent pour l'utilisateur correspondant à l'identifiant déterminé 125, ou dans un deuxième état, par exemple un état absent pour l'utilisateur correspondant à l'identifiant déterminé 125. Les états des identifiants 21, 22, 23 peuvent être stockés dans la mémoire 53.

Le lecteur de dispositifs utilisateurs 35 peut par exemple être fixe, de préférence fixé à un mur. Il est aussi possible, tout en restant dans le cadre de l'invention, qu'un lecteur de dispositifs utilisateurs 35 spécifique soit mécaniquement fixé à un dispositif Ethernet spécifique. Cela permet d'arrêter le courant ou de rétablir le courant dans ce dispositif Ethernet spécifique, sur base d'une information d'entrée 115 envoyée par le lecteur de dispositifs utilisateurs 35 spécifique. Le lecteur de dispositifs utilisateurs 35 spécifique soit ne demande pas d'alimentation électrique extérieure (parce qu'il comprend une batterie, une pile ou parce que sa technologie ne nécessite pas d'alimentation électrique), soit est alimenté par un autre moyen que le câble Ethernet du dispositif Ethernet spécifique.

La figure 7 est un exemple très schématique d'une première liste 105 qui met en correspondance des dispositifs Ethernet 61, 62, 63a, 63b avec des identifiants 71a, 71b, 72, 73. Le dispositif Ethernet 61 correspond à deux identifiants 71a, 71b. Le dispositif Ethernet 62 correspond à un identifiant 72. Les dispositifs Ethernet 63a, 63b correspondent à un identifiant 73.

De préférence, lorsqu'un dispositif Ethernet 61 correspond à plusieurs identifiants 71a, 71b, l'information d'entrée 115 permet aussi de déterminer si l'identifiant déterminé 125 est dans un premier état ou dans un deuxième état: le rétablissement du courant électrique 140 dans le câble Ethernet alimentant le dispositif Ethernet déterminé 73 est déclenché si au moins un des identifiants 71a, 71b est dans le premier état, et l'arrêt du courant électrique 130 dans le câble Ethernet alimentant le dispositif Ethernet déterminé 61 est déclenché si tous les identifiants 71a, 71b correspondant au dispositif Ethernet déterminé 61 dispositif Ethernet déterminé 61 sont dans le deuxième état. Par exemple, si le premier état indique que l'utilisateur correspondant à l'identifiant est présent, et le deuxième état indique qu'il est absent, cela permet que le dispositif Ethernet 61 commun à plusieurs utilisateurs 71a, 71b soit alimenté si au moins un de ses utilisateurs 71a, 71b est présent, et qu'il soit coupé si tous ses utilisateurs 71a, 71b sont absents.

De préférence, lorsqu'un des identifiants 73 correspond à plusieurs dispositifs Ethernet 63a, 63b, la réception 110 de l'information d'entrée 115 résulte en un arrêt du courant électrique 130 ou en un rétablissement du courant électrique 140 dans les câbles Ethernet alimentant tous les dispositifs Ethernet 63a, 63 correspondant à l'identifiant 73 déterminé. Par exemple, un identifiant peut correspondre à un téléphone Ethernet, à une station d'accueil (docking station) Ethernet, et à un écran Ethernet, qui sont tous mis sous tension (respectivement hors tension) lorsque l'utilisateur correspondant à l'identifiant arrive dans le bâtiment (respectivement sort du bâtiment).

En d'autres termes, l'invention se rapporte à une méthode de gestion de l'alimentation électrique de dispositifs Ethernet 11, 12, 13. Les dispositifs Ethernet 11, 12, 13 sont connectés à un système de gestion 50 par un câble Ethernet 1, 2, 3 assurant leur alimentation en courant. Lorsqu'une information d'entrée 115 est reçue par le système de gestion 50, celui-ci détermine, sur base d'une première liste 105 des dispositifs Ethernet 11, 12, 13, s'il doit couper l'alimentation d'un ou plusieurs des dispositifs Ethernet 11, 12, 13, ou, au contraire, rétablir leur alimentation.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Méthode (1000) pour gérer l'alimentation électrique de dispositifs Ethernet (11, 12, 13), chaque dispositif Ethernet (11, 12, 13) étant alimenté électriquement par un câble Ethernet (1, 2, 3) connecté à un système de gestion (50) comprenant une mémoire stockant une première liste (105) de dispositifs Ethernet (11, 12, 13) et d'identifiants (21, 22, 23), la première liste (105) mettant en correspondance les dispositifs Ethernet (11, 12, 13) avec les identifiants (21, 22, 23) ; la méthode comprenant les étapes suivantes :
• le système de gestion (50) reçoit (110) une information d'entrée (115) permettant de déterminer un (125) des identifiants (21, 22, 23),
• le système de gestion (50) détermine (120), sur base de la première liste (105), le dispositif Ethernet (135) correspondant à l'identifiant déterminé (125), et
• le système de gestion (50) arrête le courant électrique (130) ou rétablit le courant électrique (140) dans le câble Ethernet alimentant le dispositif Ethernet déterminé (135) ;
**caractérisée** en ce la réception (110) de l'information d'entrée (115) permettant de déterminer ledit au moins un des identifiants (21, 22, 23) est déclenchée par une opération utilisant un système d'entrée (30), distinct des dispositifs Ethernet (11, 12, 13) et du système de gestion (50), et comprenant un dispositif utilisateur (31, 32a) et/ou un calendrier électronique (32b, 33) correspondant à un des identifiants (21, 22, 23) ; l'information d'entrée (115) indiquant le dispositif utilisateur (31, 32a) ou le calendrier électronique (32b, 33) utilisé lors de l'opération.

2. Méthode selon la revendication 1, dans laquelle l'opération est réalisée par un utilisateur à l'aide du dispositif utilisateur (31, 32a).

3. Méthode selon l'une quelconque des revendications précédentes, comprenant une détermination (100) de la première liste (105), la détermination (100) de la première liste (105) comprenant préférentiellement une réception d'une liste (405) d'utilisateurs (41, 42, 43), chaque utilisateur correspondant à un des identifiants (21, 22, 23).

4. Méthode selon l'une quelconque des revendications précédentes, dans laquelle l'information d'entrée (115) permet de déterminer s'il faut déclencher un arrêt du courant électrique (130) ou un rétablissement du courant électrique (140) dans le câble Ethernet.

5. Méthode selon l'une quelconque des revendications précédentes, dans laquelle l'opération à l'aide dudit dispositif utilisateur (31, 32a) est une lecture par un lecteur de dispositifs utilisateurs (35).

6. Méthode selon la revendication précédente, dans laquelle le dispositif utilisateur (31, 32a) comprend un dispositif de pointage, et l'opération déclenchant la réception (110) est un pointage d'entrée, qui déclenche un rétablissement du courant électrique (140) dans le câble Ethernet, ou un pointage de sortie, qui déclenche un arrêt du courant électrique (130) dans le câble Ethernet.

7. Méthode selon la revendication 5 ou 6, dans laquelle le dispositif utilisateur (31, 32a) comprend un dispositif de géolocalisation, et l'opération déclenchant la réception (110) de l'information d'entrée (115) est une géolocalisation dans une zone prédéterminée.

8. Méthode selon l'une quelconque des revendications précédentes, dans laquelle au moins un des identifiants (22, 23) correspond au calendrier électronique (32b, 33), et dans laquelle l'information d'entrée (115) provient d'une donnée issue dudit calendrier électronique (32b, 33).

9. Méthode selon l'une quelconque des revendications précédentes, dans laquelle la première liste (105) met en correspondance au moins un des identifiants (73) avec plusieurs dispositifs Ethernet (63a, 63b), et dans laquelle la réception (110) d'une information d'entrée (115) permettant de déterminer ledit au moins un des identifiants (73) déclenche un arrêt du courant électrique (130) ou un rétablissement du courant électrique (140) dans les câbles Ethernet alimentant tous les dispositifs Ethernet (63a, 63b) correspondant à l'identifiant (73) déterminé.

10. Méthode selon l'une quelconque des revendications précédentes, dans laquelle la première liste (105) met en correspondance plusieurs identifiants (71a, 71b) avec au moins un des dispositifs Ethernet (61).

11. Méthode selon la revendication 10, dans laquelle l'information d'entrée (115) permet aussi de déterminer si l'identifiant déterminé (125) est dans un premier état ou dans un deuxième état, et dans laquelle le rétablissement du courant électrique (140) dans le câble Ethernet alimentant le dispositif Ethernet déterminé (73) est déclenché si au moins un des identifiants (71a, 71b) est dans le premier état, et l'arrêt du courant électrique (130) dans le câble Ethernet alimentant le dispositif Ethernet déterminé (61) étant déclenché si tous les identifiants (71a, 71b) sont dans le deuxième état.

12. Méthode selon l'une quelconque des revendications précédentes, dans laquelle :
- au moins un des dispositifs Ethernet (11, 12, 13) est : un téléphone, un guichet bancaire automatique, une antenne, une borne interactive, un écran, une imprimante, une caméra, ou une station d'accueil, et/ou
- les câbles Ethernet (1, 2, 3) sont connectés d'une part aux dispositifs Ethernet (11, 12, 13) et d'autre part à des ports d'un système de gestion (50), par exemple à des ports d'un commutateur réseau (52) du système de gestion (50), l'arrêt du courant électrique (130) étant réalisé par une fermeture du port connecté au câble Ethernet alimentant le dispositif Ethernet déterminé (135), et le rétablissement du courant électrique (140) étant réalisé par une ouverture du port connecté au câble Ethernet alimentant le dispositif Ethernet déterminé (135).

13. Système (500) pour gérer l'alimentation électrique de dispositifs Ethernet (11, 12, 13), chaque dispositif Ethernet (11, 12, 13) étant alimenté électriquement par un câble Ethernet (1, 2, 3) connecté à un système de gestion (50) comprenant une mémoire stockant une première liste (105) de dispositifs Ethernet (11, 12, 13) et d'identifiants (21, 22, 23), la première liste (105) mettant en correspondance les dispositifs Ethernet (11, 12, 13) avec les identifiants (21, 22, 23), le système (500) comprenant des moyens pour mettre en oeuvre une méthode (1000) selon l'une quelconque des revendications précédentes.

14. Programme d'ordinateur comprenant des instructions qui conduisent un système (500) selon la revendication 13 à exécuter les étapes d'une méthode selon l'une quelconque des revendications 1 à 12.

15. Support lisible par ordinateur sur lequel est enregistré un programme d'ordinateur selon la revendication 14.

## Patentansprüche

1. Verfahren (1000) zum Verwalten der Stromversorgung von Ethernet-Vorrichtungen (11, 12, 13), wobei jede Ethernet-Vorrichtung (11, 12, 13) über ein Ethernet-Kabel (1, 2, 3) mit Strom versorgt wird, das mit einem Verwaltungssystem (50) verbunden ist, das einen Speicher umfasst, der eine erste Liste (105) von Ethernet-Vorrichtungen (11, 12, 13) und Kennungen (21, 22, 23) speichert, wobei die erste Liste (105) die Ethernet-Vorrichtungen (11, 12, 13) den Kennungen (21, 22, 23) zuordnet; wobei das Verfahren die folgenden Schritte umfasst:
- das Verwaltungssystem (50) empfängt (110) eine Eingangsinformation (115), die es ermöglicht, eine (125) der Kennungen (21, 22, 23) zu bestimmen,
- das Verwaltungssystem (50) bestimmt (120) auf Basis der ersten Liste (105) die Ethernet-Vorrichtung (135), die der bestimmten Kennung (125) entspricht, und
- das Verwaltungssystem (50) unterbricht den Strom (130) oder stellt den Strom in dem Ethernet-Kabel, das die bestimmte Ethernet-Vorrichtung (135) versorgt, wieder her (140);
**dadurch gekennzeichnet, dass** der Empfang (110) der Eingangsinformation (115), die es ermöglicht, die mindestens eine der Kennungen (21, 22, 23) zu bestimmen, durch eine Operation ausgelöst wird, die ein Eingabesystem (30) verwendet, das sich von den Ethernet-Vorrichtungen (11, 12, 13) und dem Verwaltungssystem (50) unterscheidet und eine Benutzervorrichtung (31, 32a) und/oder einen elektronischen Kalender (32b, 33) umfasst, die bzw. der einer der Kennungen (21, 22, 23) entspricht; wobei die Eingangsinformation (115) die Benutzervorrichtung (31, 32a) oder den elektronischen Kalender (32b, 33) angibt, die bzw. der bei der Operation verwendet wurde.

2. Verfahren nach Anspruch 1, wobei die Operation von einem Benutzer mithilfe der Benutzervorrichtung (31, 32a) ausgeführt wird.

3. Verfahren nach einem der vorstehenden Ansprüche, das ein Bestimmen (100) der ersten Liste (105) umfasst, wobei das Bestimmen (100) der ersten Liste (105) vorzugsweise ein Empfangen einer Liste (405) von Benutzern (41, 42, 43) umfasst, wobei jeder Benutzer einer der Kennungen (21, 22, 23) entspricht.

4. Verfahren nach einem der vorstehenden Ansprüche, wobei die Eingangsinformation (115) es ermöglicht, zu bestimmen, ob eine Unterbrechung des Stroms (130) oder eine Wiederherstellung des Stroms (140) in dem Ethernet-Kabel ausgelöst werden soll.

5. Verfahren nach einem der vorstehenden Ansprüche, wobei die Operation mithilfe der Benutzervorrichtung (31, 32a) ein Lesen durch ein Lesegerät von Benutzervorrichtungen (35) ist.

6. Verfahren nach dem vorstehenden Anspruch, wobei die Benutzervorrichtung (31, 32a) eine Zeigevorrichtung umfasst und die den Empfang (110) auslösende Operation ein Eingangs-Zeigen ist, das eine Wiederherstellung des Stroms (140) in dem Ethernet-Kabel auslöst, oder ein Ausgangs-Zeigen, das eine Unterbrechung des Stroms (130) in dem Ethernet-Kabel auslöst.

7. Verfahren nach Anspruch 5 oder 6, wobei die Benutzervorrichtung (31, 32a) eine Geolokalisierungsvorrichtung umfasst und die Operation, die den Empfang (110) der Eingangsinformation (115) auslöst, eine Geolokalisierung in einem vorbestimmten Gebiet ist.

8. Verfahren nach einem der vorstehenden Ansprüche, wobei mindestens eine der Kennungen (22, 23) dem elektronischen Kalender (32b, 33) entspricht und wobei die Eingangsinformation (115) von Daten aus dem elektronischen Kalender (32b, 33) stammt.

9. Verfahren nach einem der vorstehenden Ansprüche, wobei die erste Liste (105) mindestens eine der Kennungen (73) mehreren Ethernet-Vorrichtungen (63a, 63b) zuordnet, und wobei der Empfang (110) einer Eingangsinformation (115), die es ermöglicht, die mindestens eine der Kennungen (73) zu bestimmen, eine Unterbrechung des Stroms (130) oder eine Wiederherstellung des Stroms (140) in den Ethernet-Kabeln, die alle der bestimmten Kennung (73) entsprechenden Ethernet-Vorrichtungen (63a, 63b) versorgen, auslöst.

10. Verfahren nach einem der vorstehenden Ansprüche, wobei die erste Liste (105) mindestens einer der Ethernet-Vorrichtungen (61) mehrere Kennungen (71a, 71b) zuordnet.

11. Verfahren nach Anspruch 10, wobei die Eingangsinformation (115) es auch ermöglicht, zu bestimmen, ob sich die bestimmte Kennung (125) in einem ersten Zustand oder in einem zweiten Zustand befindet, und wobei die Wiederherstellung des Stroms (140) in dem Ethernet-Kabel, das die bestimmte Ethernet-Vorrichtung (73) versorgt, ausgelöst wird, wenn sich mindestens eine der Kennungen (71a, 71b) in dem ersten Zustand befindet, und die Unterbrechung des Stroms (130) in dem Ethernet-Kabel, das die bestimmte Ethernet-Vorrichtung (61) versorgt, ausgelöst wird, wenn sich alle Kennungen (71a, 71b) in dem zweiten Zustand befinden.

12. Verfahren nach einem der vorstehenden Ansprüche, wobei:
- mindestens eine der Ethernet-Vorrichtungen (11, 12, 13) ist: ein Telefon, ein Bankautomat, eine Antenne, ein interaktives Terminal, ein Bildschirm, ein Drucker, eine Kamera, oder eine Dockingstation, und/oder
- die Ethernet-Kabel (1, 2, 3) einerseits mit den Ethernet-Vorrichtungen (11, 12, 13) und andererseits mit Ports eines Verwaltungssystems (50), zum Beispiel mit Ports eines Netzwerk-Switches (52) des Verwaltungssystems (50), verbunden sind, wobei die Unterbrechung des Stroms (130) durch ein Schließen des Ports, der mit dem die bestimmte Ethernet-Vorrichtung (135) versorgenden Ethernet-Kabel verbunden ist, ausgeführt wird, und die Wiederherstellung des Stroms (140) durch ein Öffnen des Ports, der mit dem die bestimmte Ethernet-Vorrichtung (135) versorgenden Ethernet-Kabel verbunden ist, ausgeführt wird.

13. System (500) zum Verwalten der Stromversorgung von Ethernet-Vorrichtungen (11, 12, 13), wobei jede Ethernet-Vorrichtung (11, 12, 13) über ein Ethernet-Kabel (1, 2, 3) mit Strom versorgt wird, das mit einem Verwaltungssystem (50) verbunden ist, das einen Speicher umfasst, der eine erste Liste (105) von Ethernet-Vorrichtungen (11, 12, 13) und Kennungen (21, 22, 23) speichert, wobei die erste Liste (105) die Ethernet-Vorrichtungen (11, 12, 13) den Kennungen (21, 22, 23) zuordnet, wobei das System (500) Mittel zum Implementieren eines Verfahrens (1000) nach einem der vorstehenden Ansprüche umfasst.

14. Computerprogramm, das Anweisungen umfasst, die ein System (500) nach Anspruch 13 dazu bringen, die Schritte eines Verfahrens nach einem der Ansprüche 1 bis 12 auszuführen.

15. Computerlesbarer Träger, auf dem ein Computerprogramm nach Anspruch 14 aufgezeichnet ist.

## Claims

1. A method (1000) for managing the supply of electrical power to Ethernet devices (11, 12, 13), each Ethernet device (11, 12, 13) being electrically power-supplied by an Ethernet cable (1, 2, 3) connected to a management system (50) comprising a memory storing a first list (105) of Ethernet devices (11, 12, 13) and identifiers (21, 22, 23), the first list (105) mapping the Ethernet devices (11, 12, 13) to the identifiers (21, 22, 23); the method comprising the following steps of:
- the management system (50) receives (110) an input information (115) allowing to determine one (125) of the identifiers (21, 22, 23),
- the management system (50) determines (120), based on the first list (105), the Ethernet device (135) corresponding to the determined identifier (125), and
- the management system (50) interrupts the electrical current (130) or reestablish the electrical current (140) to the Ethernet cable supplying power to the determined Ethernet device (135);
**characterised in that** the reception (110) of the input information (115) allowing for determining said at least one of the identifiers (21, 22, 23) is triggered by an operation using an input system (30), distinct from the Ethernet devices (11, 12, 13) and the management system (50), and comprising a user device (31, 32a) and/or an electronic calendar (32b, 33) corresponding to one of the identifiers (21, 22, 23); the input information (115) indicating the user device (31, 32a) or the electronic calendar (32b, 33) used in the operation.

2. The method of claim 1, wherein the operation is carried out by a user using the user device (31, 32a).

3. The method according to any one of the preceding claims, comprising a determination (100) of the first list (105), the determination (100) of the first list (105) preferably comprising a reception of a list (405) of users (41, 42, 43), each user corresponding to one of the identifiers (21, 22, 23).

4. The method according to any one of the preceding claims, wherein the input information (115) allows to determine whether to trigger an interruption of the electrical current (130) or a re-establishment of the electrical current (140) to the Ethernet cable.

5. The method according to any one of the preceding claims, wherein the operation with said user device (31, 32a) is a reading by a user device reader (35).

6. The method according to the preceding claim, wherein the user device (31, 32a) comprises a clocking device, and the operation triggering the reception (110) is a clocking in, which triggers a re-establishment of the electrical current (140) to the Ethernet cable, or a clocking out, which triggers an interruption of the electrical current (130) to the Ethernet cable.

7. The method according to claim 5 or 6, wherein the user device (31, 32a) comprises a geolocation device, and the operation triggering the reception (110) of the input information (115) is a geolocation in a predetermined area.

8. The method according to any of the preceding claims, wherein at least one of the identifiers (22, 23) corresponds to the electronic calendar (32b, 33), and wherein the input information (115) comes from a data resulting from said electronic calendar (32b, 33).

9. The method according to any one of the preceding claims, wherein the first list (105) maps at least one of the identifiers (73) to a plurality of Ethernet devices (63a, 63b), and wherein the reception (110) of an input information (115) allowing for determining said at least one of the identifiers (73) triggers an interruption of the electrical current (130) or a re-establishment of the electrical current (140) to the Ethernet cables supplying power to all the Ethernet devices (63a, 63b) corresponding to the determined identifier (73).

10. The method according to any of the preceding claims, wherein the first list (105) maps a plurality of identifiers (71a, 71b) to at least one of the Ethernet devices (61).

11. The method according to claim 10, wherein the input information (115) also allows to determine whether the determined identifier (125) is in a first state or in a second state, and wherein the re-establishment of the electrical current (140) to the Ethernet cable supplying power to the determined Ethernet device (73) is triggered if at least one of the identifiers (71a, 71b) is in the first state, and the interruption of the electrical current (130) to the Ethernet cable supplying power to the determined Ethernet device (61) being triggered if all the identifiers (71a, 71b) are in the second state.

12. The method according to any of the preceding claims, wherein:
- at least one of the Ethernet devices (11, 12, 13) is: a telephone, an automated banking machine, an antenna, an interactive terminal, a screen, a printer, a camera, or a docking station, and/or
- the Ethernet cables (1, 2, 3) are connected on the one hand to the Ethernet devices (11, 12, 13) and on the other hand to ports of a management system (50), for example to ports of a network switch (52) of the management system (50), the interruption of the electrical current (130) being carried out by closing the port connected to the Ethernet cable supplying power to the determined Ethernet device (135), and the re-establishment of the electrical current (140) being carried out by opening the port connected to the Ethernet cable supplying power to the determined Ethernet device (135).

13. A system (500) for managing the supply of electrical power to Ethernet devices (11, 12, 13), each Ethernet device (11, 12, 13) being electrically power-supplied by an Ethernet cable (1, 2, 3) connected to a management system (50) comprising a memory storing a first list (105) of Ethernet devices (11, 12, 13) and identifiers (21, 22, 23), the first list (105) mapping the Ethernet devices (11, 12, 13) to the identifiers (21, 22, 23), the system (500) comprising means for implementing a method (1000) according to any of the preceding claims.

14. A computer program comprising instructions that lead a system (500) according to claim 13 to execute the steps of a method according to any of claims 1 to 12.

15. A computer-readable medium on which a computer program according to claim 14 is recorded.
